# FASCICULE DE BREVET EUROPEEN

(11) **EP 1 982 828 B1**
(45) Date de publication et mention de la délivrance du brevet: **27.01.2010**
(21) Numéro de dépôt: 08290228.9
(22) Date de dépôt: 10.03.2008
(51) Int. Cl.: B32B 3/10, B32B 21/13, B27D 1/04

(54) **BLOC DE BOIS USINABLE POUR LA CONSTITUTION D'UN OUTILLAGE, SON PROCÉDÉ DE FABRICATION ET OUTILLAGE OBTENU**
MASCHINENBEARBEITBARER HOLZBLOCK ZUR HERSTELLUNG EINES WERKZEUGS, SEIN HERSTELLUNGSVERFAHREN UND SO ERHALTENES WERKZEUG
MACHINABLE BLOCK OF WOOD FOR FORMING A TOOL, ITS MANUFACTURING METHOD AND TOOL OBTAINED

(30) Priorité: 12.03.2007 FR 0701755
(43) Date de publication de la demande: 22.10.2008
(73) Titulaire: Merle, Henrick, 44680 Chemere (FR); Merle, Chantal, 44680 Saint Hilaire de Chaleons (FR)
(72) Inventeur: Sevestre, Ivan, 44230 Saint Sebastien sur Loire (FR); Merle, Henrick, 44680 Chemere (FR)
(74) Mandataire: Laget, Jean-Loup

(56) Documents cités:
- EP-A- 0 387 902
- EP-A- 0 435 273
- EP-A2- 0 921 249
- DE-A1- 19 604 433

## Description

La présente invention concerne un bloc de bois usinable pour la constitution d'un outillage, tel que matrice, poinçon ou moule, le procédé d'élaboration d'un tel bloc, ainsi que l'outillage formé par l'usinage d'un tel bloc.

On connaît déjà des blocs usinables réalisés à partir de bois ou de dérivés de bois qui permettent la fabrication de forme usinée utilisée comme modèle ou moule.

Généralement, un aggloméré, tel que du médium, est utilisé. Toutefois, les déformations importantes observées à des températures supérieures à 100°C limitent l'utilisation de telles solutions.

A titre d'arrière-plan technologique, il est connu des panneaux ou blocs de panneaux, tels que décrits dans les brevets DE-19604433, EP-0.435.273, EP-0.387.902 et EP-0.921.249.

Un but de la présente invention est donc de proposer un bloc de bois usinable dont la conception permet l'obtention d'un bloc stable dimensionnellement y compris à des températures supérieures à 100°C.

Un autre but de la présente invention est de proposer un bloc de bois usinable pour la constitution d'un outillage dont la conception permet l'obtention d'un bloc de bois de poids relativement faible et de coût raisonnable associés à une excellente tenue à la température.

A cet effet, l'invention a pour objet un bloc de bois usinable pour la constitution d'un outillage, tel que matrice, poinçon, moule, ledit bloc présentant une plage de température d'utilisation prédéterminée fonction de l'outillage à réaliser et comportant une zone à usiner, dite fonctionnelle, et une zone non destinée à être usinée, dite support, la zone support servant à la stabilité mécanique et dimensionnelle de la zone à usiner, caractérisé en ce que la zone support dudit bloc est formée d'au moins une couche à au moins une strate de panneau(x) de contreplaqué rétifié.

Il convient de rappeler en préalable que le terme "bois" doit être pris dans l'ensemble de la demande de brevet dans son acceptation la plus large et inclut à la fois les bois bruts et transformés, notamment les bois de menuiserie, de charpente, de placage et les dérivés de bois, tels que contreplaqué, panneau extrudé, panneau de fibres de bois, panneau de copeaux de bois, panneau latté...

En conséquence, le terme "bloc de bois" désigne indifféremment les blocs formés de dérivés du bois et les blocs mixtes formés de bois et de dérivés du bois ou en d'autres termes de bois brut et de bois transformé.

Selon une forme de réalisation préférée de l'invention, la zone support dudit bloc est formée de la superposition d'au moins deux couches formées l'une d'au moins une strate de panneau(x) de contreplaqué rétifié, l'autre d'au moins une strate de panneau(x) de contreplaqué rétifié ou de tasseaux en bois massif rétifié disposés côte à côte en délimitant entre eux des passages de circulation d'air ou de morceaux de bois debout, lesdites couches étant assemblées entre elles par un liant thermodurcissable.

Il est à noter qu'on entend par bois debout, un bois dont les fibres s'étendent sensiblement perpendiculairement au plan du panneau de contreplaqué rétifié.

L'utilisation de bois rétifié associé éventuellement à la présence de passages de circulation d'air dans le cas de l'utilisation de tasseaux permet de réduire le taux d'hygrométrie du bloc et par suite d'accroître la stabilité dimensionnelle du bloc à des températures supérieures à 100°C, le retrait de la matière dû à l'évaporation de l'eau étant, dans ces conditions, réduit.

De préférence, la zone support dudit bloc est formée d'au moins une couche à au moins une strate de panneau(x) de contreplaqué rétifié interposée entre deux couches de tasseaux, lesdits tasseaux étant disposés sensiblement orthogonalement d'une couche de tasseaux à une autre.

Les tasseaux d'une couche sont disposés sensiblement parallèles entre eux et sont écartés d'une distance voisine soit, de l'épaisseur de la ou de l'une des couches de panneau(x) contreplaqué(s) qu'ils jouxtent, soit, de l'épaisseur d'un tasseau.

Généralement, la ou au moins l'une des couches de la zone support du bloc se présente sous forme d'un empilement dit isotrope de panneaux contreplaqués obtenu par superposition d'au moins deux strates de panneau(x) de contreplaqué rétifié assemblés entre eux par un liant thermodurcissable, les fibres de bois des faces d'assemblage desdits panneaux d'une strate à une autre étant disposées sensiblement orthogonales d'une face à une autre.

Indépendamment de sa conception, la zone support peut être munie d'orifices traversants de circulation d'air, notamment pour faciliter l'évacuation de l'humidité.

Dans un premier mode de réalisation de l'invention, la zone fonctionnelle à usiner est formée d'au moins une couche de planches de bois rétifié, assemblées à l'aide d'un liant thermodurcissable, lesdites planches d'une couche, parallèles entre elles, étant disposées soit, à plat et assemblées par leur chant, soit, sur chant et assemblées par leur face, avec une direction des fibres de bois, de préférence sensiblement orthogonale à la direction des fibres de la ou des couches qu'elles jouxtent.

Dans un second mode de réalisation de l'invention, la zone fonctionnelle à usiner est formée d'au moins une couche à au moins une strate de panneau(x) de contreplaqué rétifié ou de panneau(x) de particules.

De préférence, la zone fonctionnelle à usiner et la zone support sont préfabriquées avant assemblage à l'aide d'un liant thermodurcissable. Cette disposition permet l'obtention d'un bloc modulaire dont la configuration varie au gré de l'opérateur.

L'invention a encore pour objet un procédé d'élaboration d'un bloc, usinable pour la constitution d'un outillage tel que matrice, poinçon, moule, ledit bloc présentant une plage de température d'utilisation prédéterminée fonction de l'outillage à réaliser et comportant une zone à usiner dite fonctionnelle et une zone non destinée à être usinée, dite support, caractérisé en ce qu'il consiste, pour la zone support du bloc, à réaliser un empilement d'au moins deux couches formées l'une d'au moins une strate de panneau(x) de contreplaqué rétifié, l'autre de panneau(x) de contreplaqué rétifié ou de morceaux de bois debout ou de tasseaux en bois massif rétifié disposés côte à côte en délimitant entre eux des passages de circulation, à assembler sous presse ou sous vide, à l'aide d'un liant thermodurcissable présentant une température de transition vitreuse supérieure à la température d'utilisation du bloc, lesdites couches superposées et à soumettre ladite zone support à un traitement thermique à une température supérieure à la température d'utilisation du bloc.

L'invention a également pour objet un outillage, tel que matrice, poinçon, moule, caractérisé en ce qu'il est formé par usinage d'un bloc du type précité obtenu de préférence par mise en oeuvre d'un procédé conforme à l'invention.

L'invention sera bien comprise à la lecture de la description suivante d'exemples de réalisation, en référence aux dessins annexés dans lesquels :
la figure 1 représente une vue en perspective d'un bloc de bois usinable pour la constitution d'un outillage conforme à l'invention, dans une configuration dans laquelle la zone fonctionnelle à usiner est formée de panneaux de contreplaqué rétifié ;
la figure 2 représente une vue en perspective d'un autre mode de réalisation d'un bloc de bois usinable conforme à l'invention dans une configuration dans laquelle la zone à usiner est formée de planches de bois à plat ;
la figure 3 représente une vue en perspective d'un autre mode de réalisation d'un bloc de bois usinable conforme à l'invention, dans une configuration dans laquelle la zone fonctionnelle à usiner est formée de planches de bois rétifié assemblées sur chant ;
la figure 4 représente une vue en perspective de la zone support dudit bloc ;
la figure 5 représente une vue en perspective d'un autre mode de réalisation de la zone support dudit bloc dans laquelle la zone support est formée d'un panneau de contreplaqué et d'une couche de bois debout ;
la figure 6 représente une vue en perspective d'un autre mode de réalisation de la zone support dudit bloc dans laquelle la zone support est formée de quatre couches de contreplaqué rétifié à une ou plusieurs strates de panneaux, trois couches de tasseaux interposés entre lesdites couches de panneaux de contreplaqués et une couche de bois debout formée par juxtaposition de morceaux de bois parallélépipédiques dont les fibres s'étendent orthogonalement au plan des panneaux de contreplaqué;
la figure 7 représente une vue en perspective d'un outillage obtenu à partir d'un bloc de bois conforme à l'invention formé d'un empilement de panneaux de contreplaqué rétifié et
la figure 8 représente une vue en perspective d'un autre mode de réalisation de l'invention dans laquelle la zone support est formée, d'une seule couche à une strate de panneau contreplaqué rétifié, tandis que la zone à usiner est formée de planches de bois rétifié à plat.

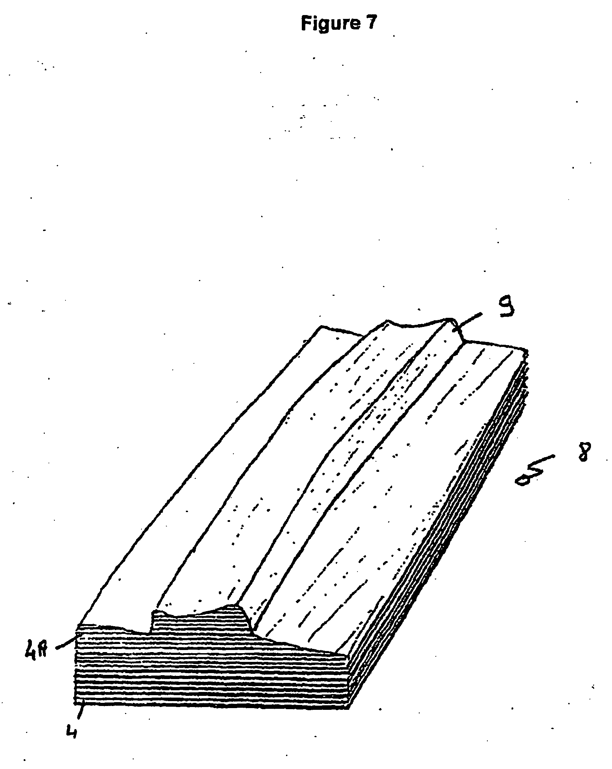

Le bloc 1 de bois, objet de l'invention, et donc plus particulièrement destiné à la réalisation d'un outillage 8 du type de celui fourni en exemple à la figure 7. Ces outillages 8, tel que matrice, poinçon ou moule, sont utilisés pour la fabrication de pièces, notamment dans le domaine de l'aéronautique.

Le bloc 1, de forme générale parallélépipédique, présente une plage de température d'utilisation prédéterminée fonction de l'outillage 8 à réaliser. Une telle plage de température peut être comprise entre 20°C et 200°C.

Ce bloc 1 comporte une zone 2 à usiner, dite fonctionnelle, et une zone 3 non destinée à être usinée, dite zone support, cette zone 3 support servant à la stabilité mécanique et dimensionnelle de la zone 2 à usiner.

Ces zones 2 et 3 peuvent être réalisées sous forme de parties distinctes puis assemblées l'une à l'autre pour former le bloc 1. Dans ce cas, la zone 2 fonctionnelle et la zone 3 support sont préfabriquées avant assemblage à l'aide d'un lien thermodurcissable. L'intérêt d'une telle réalisation est de pouvoir, pour l'opérateur, choisir à volonté la conception de la zone 2 fonctionnelle et la conception de la zone 3 support, obtenant ainsi un bloc modulaire.

Dans un autre mode de réalisation de l'invention, la zone 2 à usiner et la zone 3 non destinée à être usinée, qui sont disposées dans le prolongement l'une de l'autre à l'état superposé, sont réalisées lors d'une même étape de fabrication.

Indépendamment du mode de réalisation retenu, la zone 3 support du bloc 1 est formée d'au moins une couche à au moins une strate de panneau(x) 4 de contreplaqué rétifié ou de la superposition d'au moins deux couches formées l'une d'au moins une strate de panneau(x) 4 de contreplaqué rétifié, l'autre d'au moins une strate de panneaux(x) 4 de contreplaqué rétifié ou de morceaux de bois debout, de tasseaux 5 en bois massif rétifié, disposés côte à côte en délimitant entre eux des passages 6 de circulation d'air. Lesdites couches sont assemblées entre elles par un liant thermodurcissable.

Il doit être noté que l'on entend par rétification, l'opération qui consiste à réaliser un pontage chimique (liaison covalente) entre les chaînes macromoléculaires des constituants du bois. Cette rétification se réalise par voie thermique en atmosphère et à une température contrôlée pour une durée de traitement limitée. Elle se caractérise en ce que le matériau obtenu conserve l'aspect et la structure du matériau d'origine, de couleur brune teintée dans la masse mais ne présente plus le caractère hydrophile du bois. Des exemples de procédé de rétification sont fournis à travers le brevet FR 2 604 942 et le brevet FR 2 609 927. Ainsi, la rétification consiste généralement en un traitement thermique à une température comprise entre 160°C et 300°C pendant une durée comprise entre quelques dizaines de secondes et plusieurs heures.

Pour la réalisation d'une strate de la couche formée de panneaux 4 de contreplaqué rétifié, on peut utiliser un seul panneau lorsque la dimension dudit panneau correspond à celle de l'une des faces du bloc. Généralement, toutefois, une strate de la couche de panneaux 4 de contreplaqué rétifié est formée d'une pluralité de panneaux disposés côte à côte, lesdits panneaux de la strate étant assemblés soit par recouvrement des chants biseautés ou chanfreinés desdits panneaux, soit par liaison de type rainure, languette ou par toutes autres liaisons à emboîtement géométrique. Lesdits panneaux de la strate sont ensuite maintenus assemblés l'un à l'autre par un liant thermodurcissable de même nature que celui servant à assembler les couches de la zone 3 support entre elles.

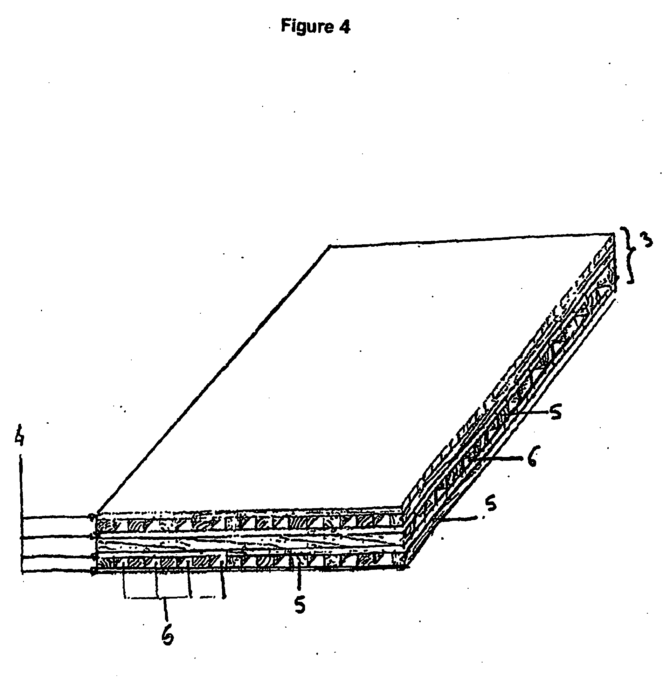

Dans l'exemple représenté à la figure 4, la zone 3 support du bloc est formée d'au moins une couche d'au moins une strate de panneaux 4 de contreplaqué rétifié interposée entre deux couches de tasseaux 5, lesdits tasseaux 5 étant disposés sensiblement orthogonalement d'une couche de tasseaux 5 à une autre.

Cette disposition permet l'obtention d'un empilement quasi isotrope permettant d'accroître la stabilité dimensionnelle d'un tel ensemble de couches lors d'une élévation de température.

Dans l'exemple représenté à la figure 4, la zone 3 support comporte quatre couches de contreplaqué rétifié à une ou plusieurs strates de panneaux et trois couches de tasseaux interposées entre lesdites couches de panneaux de contreplaqués, de sorte que les couches de panneau(x) 4 contreplaqués constituent les faces externes de la zone 3 support.

Lorsqu'une couche de panneaux 4 de contreplaqué rétifié est formée de plusieurs strates de panneaux 4 de contreplaqué rétifié, on réalise de préférence ladite couche sous forme d'un empilement dit isotrope de panneaux contreplaqué obtenu par superposition desdits panneaux. Dans cet empilement, les fibres de bois des faces d'assemblage desdits panneaux 4 d'une strate à une autre sont disposées sensiblement orthogonales d'une face à une autre. A nouveau cette disposition accroît la résistance mécanique de l'ensemble et sa stabilité dimensionnelle à des températures élevées.

Il doit être rappelé qu'un panneau 4 de contreplaqué est en lui-même un ensemble isotrope. En effet un panneau de contreplaqué est constitué de fines feuilles de bois découpées dans le sens tangentiel par déroulage d'une bille de bois ou par tranchage.

Généralement un contreplaqué est constitué d'une feuille du milieu, plus épaisse et de bois souvent tendre, appelée l'âme. Cette feuille du milieu est encadrée par deux feuilles disposées perpendiculairement puis par deux autres feuilles disposées perpendiculairement par rapport aux précédentes. Les cinq feuilles sont alors encollées et pressées pour donner une planche ou panneau de contreplaqué d'épaisseur régulière. Le panneau obtenu est remarquablement résistant. Ses propriétés mécaniques sont les mêmes dans toutes les directions. On parle alors d'un panneau isotrope. Bien évidemment le nombre de feuilles, généralement impair, peut varier d'un panneau de contreplaqué à un autre.

Comme l'illustre la figure 4, les tasseaux 5 d'une couche de la zone 3 support sont quant à eux disposés sensiblement parallèles entre eux et sont écartés d'une distance voisine soit de l'épaisseur de la ou des couche(s) de panneaux 4 contreplaqués qui jouxtent, soit de l'épaisseur d'un tasseau 5. Du fait de la disposition parallèle les tasseaux 5 ménagent des passages 6 de circulation d'air sensiblement parallèles débouchant sur deux faces parallèles opposées de la zone 3 support. Ces passages 6 de circulation d'air facilitent l'évaporation de l'eau et permettent, par conséquent, d'accroître à nouveau la stabilité dimensionnelle de la zone 3 support à des températures élevées.

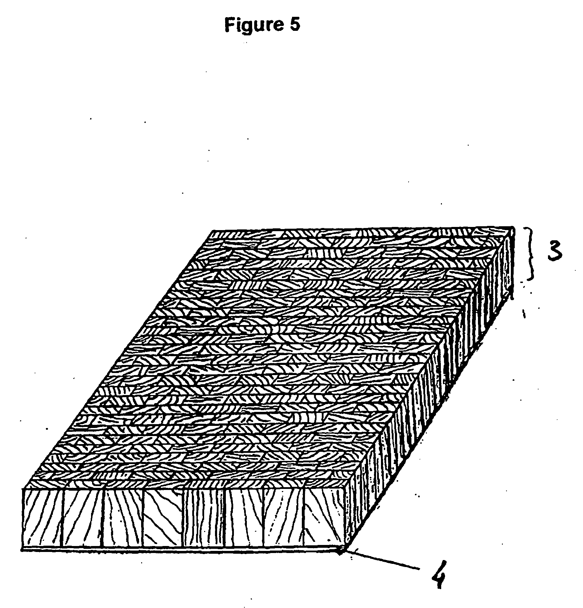

La figure 5 illustre un autre mode de réalisation de la zone 3 support formée d'une couche de contreplaqué rétifié à une ou plusieurs strates de panneaux et d'une couche de bois debout. Cette couche de bois debout est formée d'un assemblage par juxtaposition de blocs de bois parallélépipédiques, les fibres des blocs étant disposées sensiblement perpendiculairement au plan général du ou des panneaux de contreplaqué d'où le terme "debout", c'est-à-dire verticalement lorsque le ou les panneau(x) de contreplaqué sont à plat.

La zone 3 support peut de manière équivalente être formée d'une couche de contreplaqué rétifié à une ou plusieurs strates de panneaux prise en sandwich entre deux couches de bois debout.

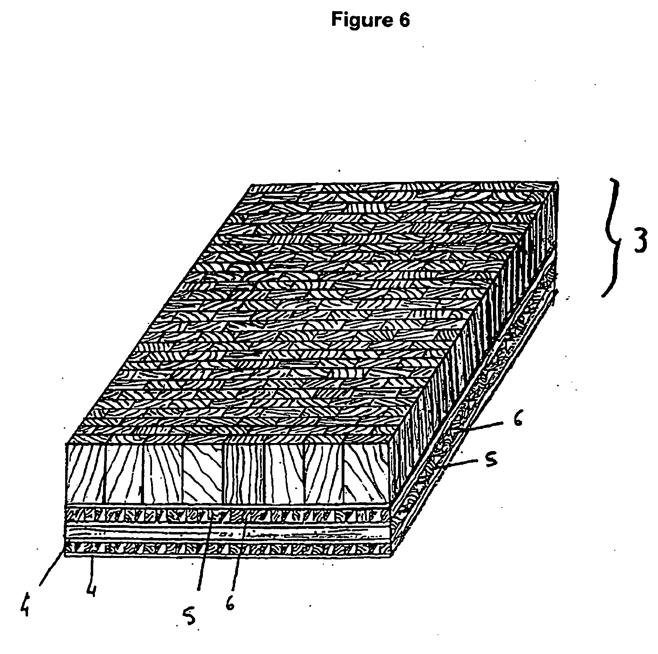

Dans le mode de réalisation représenté à la figure 6, la zone support est formée de quatre couches de contreplaqué rétifié à une ou plusieurs strates de panneaux, trois couches de tasseaux, chaque couche de tasseaux étant interposée entre deux couches de panneaux de contreplaqué et une couche de bois debout formée par juxtaposition de morceaux de bois parallélépipédiques dont les fibres s'étendent orthogonalement au plan des panneaux de contreplaqué.

Dans un autre mode de réalisation non représenté, la zone 3 support peut encore être formée de la superposition d'au moins deux couches formées l'une d'au moins une strate de panneau(x) 4 de contreplaqué rétifié(s), l'autre d'au moins une strate de panneau(x) de particules de bois. Par exemple, il peut être utilisé des panneaux de type aggloméré formés de particules ou fibres de bois et d'un liant, tels que les panneaux dit MDF (Medium density fibers) (Fibres de moyenne densité).

Il doit être noté que de tels panneaux de particules peuvent également être utilisé pour la réalisation de la zone 2 fonctionnelle à usiner.

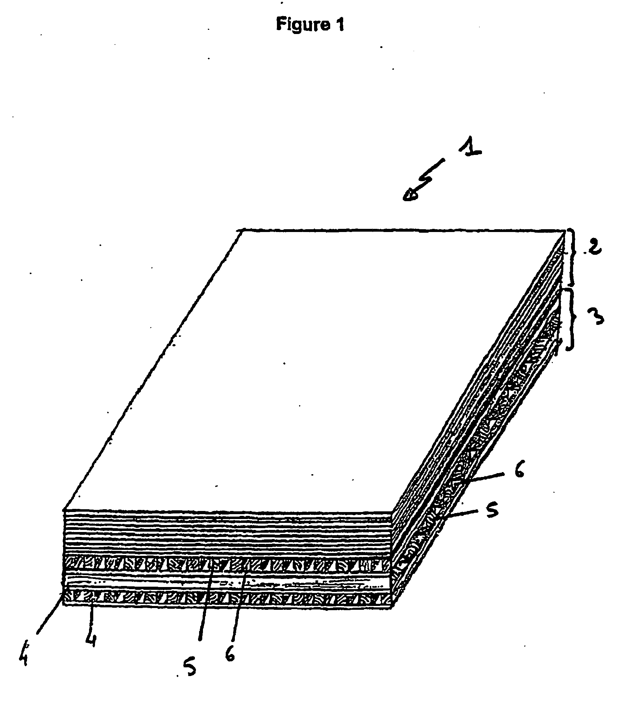

La zone 2 fonctionnelle à usiner forme, dans les exemples représentés, la partie supérieure du bloc 1 de bois tandis que la zone 3 support constitue la partie inférieure du bloc. Cette zone 2 fonctionnelle à usiner peut être réalisée de diverses manières. Trois modes de réalisation de cette zone 2 fonctionnelle à usiner ont été représentés aux figures 1 à 3.

Ainsi dans l'exemple représenté à la figure 1, la zone 2 fonctionnelle à usiner est formée d'au moins une couche à au moins une strate de panneaux 4A de contreplaqué rétifié. Les panneaux 4A de contreplaqué rétifié sont de même nature que les panneaux 4 de contreplaqué utilisés pour la zone 3 support à l'exception du fait qu'ils sont, lors de leur utilisation pour la réalisation de la zone 2 fonctionnelle, soumis à un contrôle quant à leur taux d'humidité. En effet, ce taux d'humidité doit être inférieur à 6% au moment de la fabrication de la zone 2 fonctionnelle.

Dans ce mode de réalisation, la zone 2 fonctionnelle peut être réalisée dans le prolongement de la zone 3 support. Ainsi, avant assemblage, sous presse ou sous vide, des couches superposées servant à la réalisation de la zone 3 support, il est possible de compléter l'empilement avec au moins une couche de panneau 4A contreplaqué rétifié présentant un taux d'humidité inférieur à 6%, la ou les couches supplémentaires formant la zone 2 à usiner du bloc.

Dans l'exemple représenté à la figure 7, la zone 2 fonctionnelle à usiner est formée de plusieurs couches de panneaux 4A de contreplaqué rétifié, chaque couche pouvant être formée d'une ou plusieurs strates de panneaux, chaque strate pouvant elle-même être formée d'un ou plusieurs panneaux disposés côte à côte.

De préférence, lors de l'assemblage des différentes couches entre elles à l'aide d'un liant thermodurcissable, on dispose les fibres des faces d'assemblage desdits panneaux orthogonalement entre elles pour obtenir à nouveau un ensemble isotrope. Une fois l'empilement achevé, l'ensemble est placé sous presse ou sous vide pour permettre la prise du liant.

De la même manière que ce qui a été précisé pour la zone 3 support, chaque strate de panneaux 4A de contreplaqué rétifié peut être formée d'un panneau unique ou d'un assemblage de panneaux liés les uns aux autres par un liant thermodurcissable généralement de même nature que celui servant à lier les couches de la zone entre elles.

Après assemblage par pressage ou mise sous vide, le bloc est soumis à un traitement thermique à une température supérieure à la température d'utilisation du bloc 1. Dans ce mode de réalisation, le traitement thermique s'opère simultanément sur la zone 2 fonctionnelle et la zone 3 support du bloc. Ce traitement thermique consiste généralement en une exposition du bloc à une température de l'ordre de 100° pendant une durée d'environ une heure.

Après traitement thermique, on protège le bloc à l'aide d'un film ou de moyens tels qu'un emballage ou une caisse jusqu'à usinage.

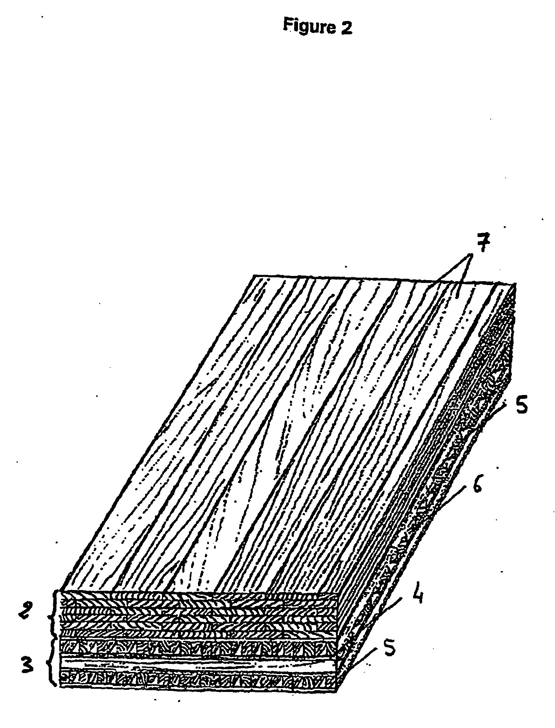

Dans un second mode de réalisation de la zone 2 fonctionnelle à usiner conforme à celui représenté à la figure 2, la zone 2 fonctionnelle à usiner est formée d'au moins une couche de planches 7 de bois rétifié parallèles entre elles, lesdites planches étant disposées à plat et assemblées par leurs chants, à l'aide d'un liant thermodurcissable.

A nouveau, cette zone 2 fonctionnelle peut être réalisée sous forme d'une couche unique de planches 7 de bois rétifié ou d'une pluralité de couches, lesdites planches étant disposées orthogonalement avec une direction des fibres de bois de chaque couche sensiblement orthogonale à la direction des fibres de la ou des couche(s) qu'elle jouxte.

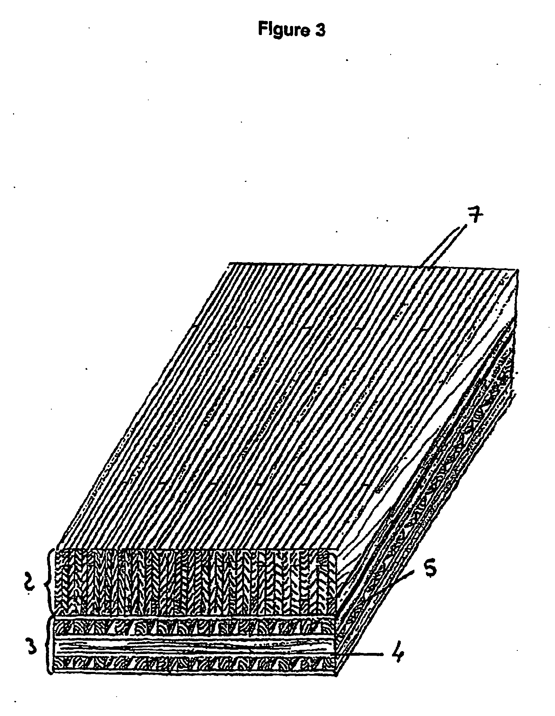

Dans le mode de réalisation représenté à la figure 3, la zone 2 fonctionnelle à usiner est formée d'au moins une couche de planches 7 de bois rétifié parallèles entre elles disposées sur chants et assemblées par leurs faces à l'aide d'un liant thermodurcissable.

Dans les modes de réalisation représentés aux figures 2 et 3, de préférence, la zone 2 fonctionnelle et la zone 3 support sont préfabriquées avant assemblage l'une à l'autre. Ainsi l'opérateur peut, dans un premier temps, choisir la zone support et la zone fonctionnelle qu'il souhaite assembler entre elles et obtient ainsi, à l'aide d'une même zone support, trois possibilités de réalisation de bloc, comme l'illustrent les figures 1 à 3.

La zone 2 fonctionnelle à usiner peut, quant à elle, être formée d'une combinaison des diverses solutions représentées aux figures 1 à 3. Dans un mode de réalisation non représenté, la zone 2 fonctionnelle à usiner est formée d'au moins une couche à au moins une strate de panneau(x) de particules de bois rétifié ou non. De préférence, le ou les panneaux utilisés sont de type MDF. La zone 2 fonctionnelle à usiner peut également comporter au moins une couche à au moins une strate de bois debout de manière similaire à ce qui est prévu pour la zone 3 support à la figure 5.

Les possibilités de réalisation de la zone 2 fonctionnelle à usiner sont donc nombreuses.

Le liant thermodurcissable utilisé, tant pour l'assemblage des éléments d'une strate entre eux que pour l'assemblage des différentes couches entre elles est choisi dans le groupe des composés formés par les résines époxy, polyester, polyuréthane, phénolique, vinylique, polyimide, ce dit liant présentant une température de transition vitreuse au moins égale à 200°C.

L'essence de bois de chaque élément, tel que panneau 4, 4A ou planche 7 ou tasseau 5 constitutif du bloc est, quant à elle, de préférence, choisie dans le groupe formé par le peuplier, le tremble, l'érable et le cryptoméria japonica.

Une fois la réalisation du bloc achevé et le traitement thermique à une température supérieure à la température d'utilisation du bloc opérée, le bloc est soit stocké, et dans ce cas, protégé par un emballage quelconque en vue d'éviter une remontée trop rapide de son taux d'humidité, soit usiné pour permettre l'obtention d'un outillage 8 conforme à celui représenté à la figure 7, la partie usinée en relief étant représentée en 9.

Une fois la surface de la zone 2 fonctionnelle à usiner ouvragée pour permettre la réalisation par usinage dudit outillage, cette surface usinée peut être revêtue d'un revêtement quelconque destiné à protéger ledit usinage. De tels traitements de surface sont bien connus à ceux versés dans cet art.

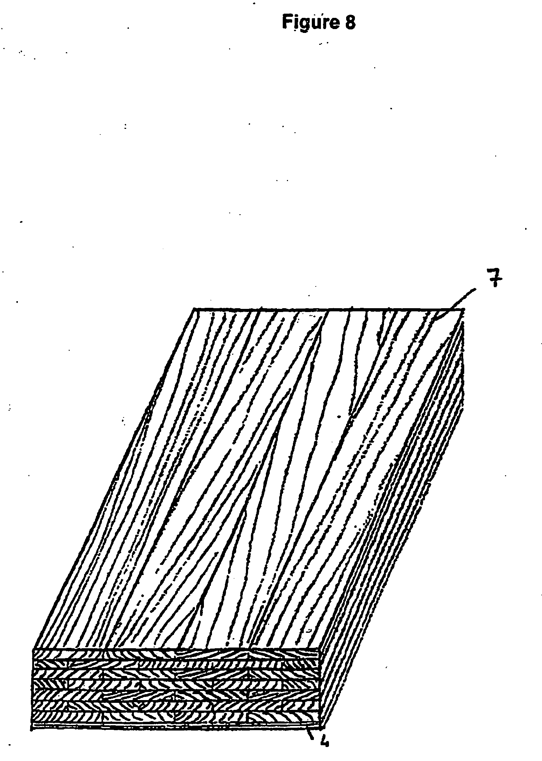

Un exemple de réalisation particulier de l'invention va, à présent, être décrit en détail. Ce mode de réalisation détaillé correspond à celui représenté à la figure 8 dans lequel la zone 3 support est formée d'une couche à une seule strate de panneau(x) de contreplaqué rétifié. Ce contreplaqué 4 a été rétifié par traitement thermique à une température comprise entre 230 et 240°. Le taux d'humidité de ce panneau a été contrôlé et est inférieur à 6%. Les quatre faces de ce panneau ont été rabotées pour être mises d'équerre et les éventuels défauts tels que fentes, gerces, noeuds ou autres ont été éliminés. De la même manière, les lames de bois massif destinées à servir à la réalisation la zone 2 à usiner ont été débitées et purgées de leur défaut. Leur taux d'humidité a également été contrôlé de manière à ce que ce dernier soit inférieur à 6%. Le panneau de contreplaqué constitutif de la zone 3 support est enduit sur l'une de ses faces d'une résine bi-composants présentant une température de transition vitreuse de 200°C. Parallèlement, les lames 7 de bois faites de bois rétifié servant à la réalisation de la zone 2 à usiner sont enduites sur chacune de leurs faces de cette même résine. Les couches de bois de la zone 2 à usiner sont réalisées de manière telle que dans la première couche de bois, les lames sont disposées dans une première direction puis, pour la deuxième couche, les lames sont disposées dans une direction transversale à la première, et ainsi de suite, jusqu'à l'obtention ici de sept couches de lames ou planches de bois rétifié, les planches de la dernière couche n'ayant été encollées que sur l'une de leurs faces. L'ensemble du bloc est ensuite placé sous une presse chauffante pendant une heure à 100°C. Ensuite, ce bloc est stabilisé en étuve pendant huit heures à 50° C. Le bloc peut ensuite être usiné avec une préfinition. Une couche de résine peut être appliquée à la surface de la zone 2 à usiner pour isoler et donner de la dureté à l'outillage permettant d'améliorer la qualité de finition de l'usinage.

## Revendications

1. Bloc (1) de bois usinable pour la constitution d'un outillage (8), tel que matrice, poinçon, moule, ledit bloc (1) présentant une plage de température d'utilisation prédéterminée fonction de l'outillage (8) à réaliser et comportant une zone (2) à usiner, dite fonctionnelle, et une zone (3) non destinée à être usinée, dite support, la zone (3) support servant à la stabilité mécanique et dimensionnelle de la zone (2) à usiner, **caractérisé en ce que** la zone (3) support dudit bloc (1) est formée d'au moins une couche à au moins une strate de panneau(x) (4) de contreplaqué rétifié(s).

2. Bloc (1) de bois selon la revendication 1,
**caractérisé en ce que** la zone (3) support dudit bloc (1) est formée de la superposition d'au moins deux couches formées l'une d'au moins une strate de panneau(x) (4) de contreplaqué rétifié(s), l'autre d'au moins une strate de panneau(x) (4) de contreplaqué rétifié(s) ou de tasseaux (5) en bois massif rétifié disposés côte à côte en délimitant entre eux des passages (6) de circulation d'air ou de morceaux de bois debout, lesdites couches étant assemblées entre elles par un liant thermodurcissable.

3. Bloc (1) de bois selon la revendication 2,
**caractérisé en ce que** la zone (3) support dudit bloc est formée d'au moins une couche à au moins une strate de panneau(x) (4) de contreplaqué rétifié interposée entre deux couches de tasseaux (5), lesdits tasseaux (5) étant disposés sensiblement orthogonalement d'une couche de tasseaux (5) à une autre.

4. Bloc (1) de bois selon l'une des revendications 2 et 3,
**caractérisé en ce que** les tasseaux (5) d'une couche sont disposés sensiblement parallèles entre eux et sont écartés d'une distance voisine soit, de l'épaisseur de la ou de l'une des couches de panneau(x) (4) contreplaqué(s) qu'ils jouxtent, soit, de l'épaisseur d'un tasseau (5).

5. Bloc (1) de bois selon l'une des revendications 1 à 4,
**caractérisé en ce que** la ou au moins l'une des couches de la zone (3) support du bloc (1) se présente sous forme d'un empilement dit isotrope de panneaux de contreplaqué obtenu par superposition d'au moins deux strates de panneau(x) (4) de contreplaqué rétifié assemblés entre eux par un liant thermodurcissable, les fibres de bois des faces d'assemblage desdits panneaux (4) d'une strate à une autre étant disposées sensiblement orthogonales d'une face à une autre.

6. Bloc (1) de bois selon l'une des revendications 1 à 5,
**caractérisé en ce que** la zone (2) fonctionnelle à usiner est formée d'au moins une couche de planches (7) de bois rétifié, assemblées à l'aide d'un liant thermodurcissable, lesdites planches (7) d'une couche, parallèles entre elles, étant disposées soit à plat, et assemblées par leur chant, soit sur chant et assemblées par leur face avec une direction des fibres de bois, de préférence sensiblement orthogonale à la direction des fibres de la ou des couches qu'elles jouxtent.

7. Bloc (1) de bois selon l'une des revendications 1 à 5,
**caractérisé en ce que** la zone (2) fonctionnelle à usiner est formée d'au moins une couche à au moins une strate de panneau(x) (4A) de contreplaqué rétifié ou de panneau(x) de particules.

8. Bloc (1) selon l'une des revendications 1 à 6,
**caractérisé en ce que** la zone (2) fonctionnelle à usiner et la zone (3) support sont préfabriquées avant assemblage à l'aide d'un liant thermodurcissable.

9. Bloc (1) selon l'une des revendications 2 et 6,
**caractérisé en ce que** le liant thermodurcissable est choisi dans le groupe des composés formés par les résines époxy, polyester, polyuréthane, phénolique, vinylique, polyimide, ledit liant présentant une température de transition vitreuse au moins égale à 200°C.

10. Bloc (1) de bois selon l'une des revendications 1 à 9,
**caractérisé en ce que** l'essence de bois de chaque élément, tel que panneau (4, 4A) ou planche (7) ou tasseau (5) constitutif du bloc est choisie dans le groupe formé par le peuplier, le tremble, l'érable et le cryptoméria japonica.

11. Procédé d'élaboration d'un bloc (1), usinable pour la constitution d'un outillage (8) tel que matrice, poinçon, moule, ledit bloc, conforme à l'une des revendications 2 à 10, présentant une plage de température d'utilisation prédéterminée fonction de l'outillage à réaliser et comportant une zone (2) à usiner dite fonctionnelle et une zone (3) non destinée à être usinée, dite support, **caractérisé en ce qu'**il consiste, pour la zone (3) support du bloc (1), à réaliser un empilement d'au moins deux couches formées l'une d'au moins une strate de panneau(x) (4) de contreplaqué rétifié, l'autre de panneau(x) (4a) de contreplaqué rétifié ou morceaux de bois debout ou de tasseaux (5) en bois massif rétifié disposés côte à côte en délimitant entre eux des passages (6) de circulation, à assembler sous presse ou sous vide, à l'aide d'un liant thermodurcissable présentant une température de transition vitreuse supérieure à la température d'utilisation du bloc, lesdites couches superposées et à soumettre ladite zone (3) support à un traitement thermique à une température supérieure à la température d'utilisation du bloc (1).

12. Procédé selon la revendication 11,
**caractérisé en ce qu'**il consiste, pour la zone (2) fonctionnelle à usiner dudit bloc formée d'au moins une couche à au moins une strate de panneau(x) (4A) contreplaqué rétifié ou de panneau(x) de particules et/ou d'au moins une couche de planches (7) de bois rétifié parallèles, disposées soit à plat, soit sur chant, et assemblées par un liant thermodurcissable, à sélectionner des panneaux (4A) et/ou des planches (7) présentant un taux d'humidité inférieur à 6 % et à soumettre, après formation, la zone (2) fonctionnelle, à un traitement thermique à une température supérieure à la température d'utilisation du bloc (1).

13. Outillage (8), tel que matrice, poinçon, moule,
**caractérisé en ce qu'**il est formé par usinage d'un bloc (1) conforme à l'une des revendications 1 à 10 obtenu de préférence par mise en oeuvre d'un procédé conforme à l'une des revendications 11 et 12.

## Claims

1. Block (1) of wood which can be machined to form a tool (8), such as a die, punch, mould, the said block (1) having a use temperature range predetermined according to the tool (8) to be produced and comprising a zone (2) to be machined, called the functional zone, and a zone (3) not intended to be machined, called the support zone, the support zone (3) serving for the mechanical and dimensional stability of the zone (2) to be machined, **characterised in that** the support zone (3) of the said block (1) is formed of at least one layer having at least one ply of retified plywood panel (s) (4).

2. Block (1) of wood according to Claim 1,
**characterised in that** the support zone (3) of the said block (1) is formed of the superposition of at least two layers, one formed of at least one ply of retified plywood panel(s) (4), the other formed of at least one ply of retified plywood panel(s) (4) or of battens (5) made of retified solid wood arranged side by side, delimiting air circulation passages (6) between them, or of upright pieces of wood, the said layers being joined together by a thermosetting binder.

3. Block (1) of wood according to Claim 2,
**characterised in that** the support zone (3) of the said block is formed of at least one layer having at least one ply of retified plywood panel(s) (4) interposed between two layers of battens (5), the said battens (5) being arranged substantially orthogonally from one layer of battens (5) to another.

4. Block (1) of wood according to one of Claims 2 and 3,
**characterised in that** the battens (5) of a layer are arranged substantially parallel to one another and are spaced by a distance of approximately either the thickness of the layer or one of the layers of plywood panel(s) (4) adjoining them or the thickness of a batten (5).

5. Block (1) of wood according to one of Claims 1 to 4,
**characterised in that** the layer or at least one of the layers of the support zone (3) of the block (1) is in the form of a stack, called an isotropic stack, of plywood panels which is obtained by superposition of at least two plies of retified plywood panel(s) (4) joined together by a thermosetting binder, the wood fibres of the joining faces of the said panels (4) from one ply to another being arranged substantially orthogonal from one face to another.

6. Block (1) of wood according to one of Claims 1 to 5,
**characterised in that** the functional zone (2) to be machined is formed of at least one layer of retified wood boards (7) joined with the aid of a thermosetting binder, the said boards (7) of a layer, parallel to one another, being arranged either flat and joined by their edge, or on edge and joined by their face, with a direction of the wood fibres preferably substantially orthogonal to the direction of the fibres of the layer or layers adjoining them.

7. Block (1) of wood according to one of Claims 1 to 5,
**characterised in that** the functional zone (2) to be machined is formed of at least one layer having at least one ply of retified plywood panel(s) (4A) or of particle board(s).

8. Block (1) of wood according to one of Claims 1 to 6,
**characterised in that** the functional zone (2) to be machined and the support zone (3) are prefabricated before joining with the aid of a thermosetting binder.

9. Block (1) of wood according to one of Claims 2 to 6,
**characterised in that** the thermosetting binder is chosen from the group of compounds formed by epoxy, polyester, polyurethane, phenolic, vinyl, polyimide resins, the said binder having a glass transition temperature at least equal to 200°C.

10. Block (1) of wood according to one of Claims 1 to 9, **characterised in that** the species of wood of each element, such as panel (4, 4A) or board (7) or batten (5) constituting the block, is chosen from the group formed by poplar, aspen, maple and cryptomeria japonica.

11. Method for manufacturing a block (1) which can be machined to form a tool (8), such as a die, punch, mould, the said block, according to one of Claims 2 to 10, having a use temperature range predetermined according to the tool to be produced and comprising a zone (2) to be machined, called the functional zone, and a zone (3) not intended to be machined, called the support zone, **characterised in that** it consists, for the support zone (3) of the block (1), in producing a stack of at least two layers, one formed of at least one ply of retified plywood panel(s) (4), the other formed of retified plywood panel(s) (4a) or upright pieces of wood or of battens (5) made of retified solid wood arranged side by side, delimiting circulation passages (6) between them, to be joined in a press or under vacuum, with the aid of a thermosetting binder having a glass transition temperature greater than the use temperature of the block, the said layers being superposed, and in subjecting the said support zone (3) to a heat treatment at a temperature greater than the use temperature of the block (1).

12. Method according to Claim 11,
**characterised in that** it consists, for the functional zone (2) to be machined of the said block formed of at least one layer having at least one ply of retified plywood panel(s) (4A) or of particle board(s) and/or of at least one layer of retified wood boards (7) which are parallel, arranged either flat or on edge and joined by a thermosetting binder, in selecting panels (4A) and/or boards (7) having a moisture content less than 6% and in subjecting, after formation, the functional zone (2) to a heat treatment at a temperature greater than the use temperature of the block (1).

13. Tool (8), such as a die, punch, mould,
**characterised in that** it is formed by machining a block (1) according to one of Claims 1 to 10, obtained preferably by carrying out a method according to one of Claims 11 and 12.

## Patentansprüche

1. Maschinell bearbeitbarer Holzblock (1) zum Formen eines Werkzeugs (8) wie Unterwerkzeug, Oberwerkzeug, Form, wobei der Block (1) einen von dem auszuführenden Werkzeug (8) abhängigen Arbeitstemperaturbereich aufweist und einen maschinell zu bearbeitenden Arbeitsbereich (2) und einen Tragbereich (3) umfasst, der nicht dafür vorgesehen ist, maschinell bearbeitet zu werden, wobei der Tragbereich (3) der mechanischen Stabilität und Maßhaltigkeit des maschinell zu bearbeitenden Bereichs (2) dient, **dadurch gekennzeichnet, dass** der Tragbereich (3) des Blockes (1) aus mindestens einer Schicht mit mindestens einer Lage aus einer oder mehreren Platten (4) aus retifiziertem Sperrholz gebildet ist.

2. Holzblock (1) nach Anspruch 1, **dadurch gekennzeichnet, dass** der Tragbereich (3) des Blockes (1) durch Übereinanderlegung von mindestens zwei Schichten gebildet wird, von denen die eine aus mindestens einer Lage aus einer oder mehreren Platten (4) aus retifiziertem Sperrholz, die andere aus mindestens einer Lage aus einer oder mehreren Platten (4) aus retifiziertem Sperrholz oder Latten (5) aus retifiziertem Massivholz, die nebeneinander angeordnet sind und zwischen einander Durchlässe (6) für den Luftumlauf begrenzen, oder aus aufrechten Holzstücken gebildet ist, wobei die Schichten mittels eines warm aushärtenden Klebstoffes miteinander verbunden sind.

3. Holzblock (1) nach Anspruch 2, **dadurch gekennzeichnet, dass** der Tragbereich (3) des Blockes aus mindestens einer Schicht mit mindestens einer Lage aus einer oder mehreren Platten (4) aus retifiziertem Sperrholz gebildet ist, die zwischen zwei Schichten aus Latten (5) angeordnet ist, wobei die Latten (5) von einer Schicht aus Latten (5) zu einer anderen im Wesentlichen senkrecht angeordnet sind.

4. Holzblock (1) nach einem der Ansprüche 2 und 3, **dadurch gekennzeichnet, dass** die Latten (5) einer Schicht im Wesentlichen parallel zueinander und in einem Abstand voneinander angeordnet sind, der entweder im Bereich der Dicke der oder einer der angrenzenden Schichten aus einer oder mehreren Sperrholzplatten (4) oder im Bereich der Dicke einer Latte (5) liegt.

5. Holzblock (1) nach einem der Ansprüche 1 bis 4, **dadurch gekennzeichnet, dass** die Schicht oder mindestens eine der Schichten des Tragbereichs (3) des Blockes (1) als isotrope Sperrholzplattenaufschichtung ausgebildet ist, die durch Übereinanderlegung von mindestens zwei Lagen aus einer oder mehreren Platten (4) aus retifiziertem Sperrholz erhalten wird, die mittels eines warm aushärtenden Klebstoffes miteinander verbunden sind, wobei die Holzfasern der Verbindungsflächen der Platten (4) von einer Lage zu einer anderen von einer Fläche zu einer anderen im Wesentlichen senkrecht angeordnet sind.

6. Holzblock (1) nach einem der Ansprüche 1 bis 5, **dadurch gekennzeichnet, dass** der maschinell zu bearbeitende Arbeitsbereich (2) aus mindestens einer Schicht von Brettern (7) aus retifiziertem Holz gebildet ist, die mittels eines warm aushärtenden Klebstoffes miteinander verbunden sind, wobei die parallel zueinander angeordneten Bretter (7) einer Schicht entweder flach angeordnet und an ihren Schmalseiten miteinander verbunden sind oder hochkant angeordnet und an ihren Flachseiten miteinander verbunden sind, wobei die Holzfasern vorzugsweise im Wesentlichen senkrecht zur Richtung der Holzfasern der angrenzenden Schicht(en) ausgerichtet sind.

7. Holzblock (1) nach einem der Ansprüche 1 bis 5, **dadurch gekennzeichnet, dass** der maschinell zu bearbeitende Arbeitsbereich (2) aus mindestens einer Schicht mit mindestens einer Lage aus einer oder mehreren Platten (4A) aus retifiziertem Sperrholz oder aus einer oder mehreren Spanplatten gebildet ist.

8. Block (1) nach einem der Ansprüche 1 bis 6, **dadurch gekennzeichnet, dass** der maschinell zu bearbeitende Arbeitsbereich (2) und der Tragbereich (3) vor der Verbindung mittels eines warm aushärtenden Klebstoffes vorgefertigt sind.

9. Block (1) nach einem der Ansprüche 2 und 6, **dadurch gekennzeichnet, dass** das warm aushärtende Bindemittel aus der Gruppe der Verbindungen ausgewählt wird, die gebildet wird von Epoxidharzen, Polyester, Polyurethan, Phenolverbindung, Vinylverbindung, Polyimid, wobei das Bindemittel eine Glasübergangstemperatur von mindestens 200 °C aufweist.

10. Holzblock (1) nach einem der Ansprüche 1 bis 9, **dadurch gekennzeichnet, dass** die Holzart jedes Elementes wie Platte (4, 4A) oder Brett (7) oder Latte (5), aus dem der Block besteht, aus der Gruppe ausgewählt wird, die gebildet wird von der Pappel, der Zitterpappel, dem Ahorn und der Sicheltanne.

11. Verfahren zur Herstellung eines maschinell bearbeitbaren Blockes (1) zum Formen eines Werkzeugs (8) wie Unterwerkzeug, Oberwerkzeug, Form, wobei der Block, nach einem der Ansprüche 2 bis 10, einen von dem auszuführenden Werkzeug abhängigen Arbeitstemperaturbereich aufweist und einen maschinell zu bearbeitenden Arbeitsbereich (2) und einen Tragbereich (3) umfasst, der nicht dafür vorgesehen ist, maschinell bearbeitet zu werden, **dadurch gekennzeichnet, dass** es für den Tragbereich (3) des Blockes (1) darin besteht, eine Aufschichtung mit mindestens zwei Schichten auszuführen, von denen eine aus mindestens einer Lage aus einer oder mehreren Platten (4) aus retifiziertem Sperrholz, die andere aus Platten (4A) aus retifiziertem Sperrholz oder aufrechten Holzstücken oder aus Latten (5) aus retifiziertem Massivholz gebildet ist, die nebeneinander angeordnet sind und zwischen einander Durchlässe (6) für den Luftumlauf begrenzen, die übereinander gelegten Schichten mittels eines warm aushärtenden Klebstoffes, dessen Glasübergangstemperatur über der Arbeitstemperatur des Blockes liegt, durch Druck oder Vakuum miteinander zu verbinden und den Tragbereich (3) einer Wärmebehandlung mit einer Temperatur zu unterziehen, die über der Arbeitstemperatur des Blockes (1) liegt.

12. Verfahren nach Anspruch 11, **dadurch gekennzeichnet, dass** es für den maschinell zu bearbeitenden Arbeitsbereich (2) des Blockes, der aus mindestens einer Schicht mit mindestens einer Lage aus einer oder mehreren Platten (4A) aus retifiziertem Sperrholz oder aus einer oder mehreren Spanplatten und/oder mindestens einer Schicht aus parallel angeordneten Brettern (7) aus retifiziertem Holz gebildet ist, die entweder flach oder hochkant angeordnet und mittels eines warm aushärtenden Klebstoffes miteinander verbunden sind, darin besteht, Platten (4A) und/oder Bretter (7) auszuwählen, deren Feuchtegehalt unter 6 % liegt, und den Arbeitsbereich nach der Ausführung (2) einer Wärmebehandlung mit einer Temperatur zu unterziehen, die über der Arbeitstemperatur des Blockes (1) liegt.

13. Werkzeug (8) wie Unterwerkzeug, Lochstanze, Form, **dadurch gekennzeichnet, dass** es durch maschinelle Bearbeitung eines Blockes (1) nach einem der Ansprüche 1 bis 10 geformt wird, der vorzugsweise durch Einsatz eines Verfahrens nach einem der Ansprüche 11 und 12 erhalten wird.
